# NEUE EUROPÄISCHE PATENTSCHRIFT

(11) **EP 1 144 896 B2**
(45) Veröffentlichungstag und Bekanntmachung des Hinweises auf die Entscheidung über den Einspruch: **27.01.2010**
(45) Hinweis auf die Patenterteilung: 13.10.2004
(21) Anmeldenummer: 00903609.6
(22) Anmeldetag: 22.01.2000
(51) Int. Cl.: F16L 5/04

(54) **VORRICHTUNG ZUR ABDICHTENDEN EINFASSUNG VON ROHR- UND/ODER LEITUNGSSTRÄNGEN**
DEVICE FOR PROVIDING A SEALING COVERING FOR A TRAIN OF PIPES AND/OR DUCTS
DISPOSITIF POUR ENTOURER DE MANIERE ETANCHE DES LIGNES DE TUBES ET/OU DE CONDUITES

(30) Priorität: 26.01.1999 DE 19902937; 09.02.1999 DE 19905103
(43) Veröffentlichungstag der Anmeldung: 17.10.2001
(73) Patentinhaber: Deutsche Rockwool Mineralwoll GmbH & Co. OHG, 45966 Gladbeck (DE)
(72) Erfinder: SCHWARK, Martin, D-46242 Bottrop (DE)
(74) Vertreter: Wanischeck-Bergmann, Axel
(86) Internationale Anmeldenummer: PCT/EP2000/000475
(87) Internationale Veröffentlichungsnummer: WO 2000/045079

(56) Entgegenhaltungen:
- WO-A-93/12565
- WO-A-97/01006
- DE-A- 19 725 301
- DE-C- 4 340 343
- US-A- 4 936 064
- Allg. bauaufsichtl. Zulassung Z-19.15-1195, Deutsches Institut für Bautechnik, 22. April 1998, Antragsteller: Grünau Illertissen GmbH;
- All. bauaufsichtl. Prüfzeugnis P-3772/7087, Deutsches Institut für Baustoffe, Massivbau und Brandschutz, 23. Januar 1998, Antragsteller: Grünau Illertissen GmbH;

## Beschreibung

Die Erfindung betrifft eine Vorrichtung zur abdichtenden Einfassung von Rohr- und *l* oder Leitungssträngen in einer Mauer- und / oder Becken- bzw. Bodenöffnung eines Gebäudes, bestehend aus einer den Rohr- und / oder Leitungsstrang ummantelnden, als Rohrschale aus Mineralfasern ausgebildeten Manschette, die bei Brandeinwirkung hitzeresistent und rauchdicht ist und einem an der Mantelfläche der Manschette anschließenden, die Mauer- und/oder Decken- bzw. Bodenöffnung ausfüllenden Schott.

Aus dem Stand der Technik sind derartige Rohrvorrichtungen bekannt. Beispielsweise offenbaren die allgemeine bauaufsichtliche Zulassung Z-19.15-1195 des Deutschen Instituts für Bautechnik vom 22. April 1998 und das allgemeine bauaufsichtliche Prüfzeugnis P-3772/7087 der Materialprüfanstalt für das Bauwesen, Braunschweig, vom 23. Januar 1998 gattungsgemässe Vorrichtungen. Im öffentlichen und Wirtschaftsbau werden häufig die elektrischen Versorgungsleitungen und die Ver- und Entsorgungsrohrleitungen hinter abgehängten Decken oder in Doppelfußböden verlegt. Die elektrischen Versorgungsleitungen, wie Lichtwellen-, Stromversorgungs- und Telekomunikationskabel werden aus Platzmangel häufig auf der Baustelle in Kombination mit Ver- und Entsorgungsrohrleitungen durch einen Wanddurchbruch bzw. Deckendurchbruch von Brandwänden oder Branddecken mit der Feuerwiderstandsklasse F 90 geführt. Derartige Durchbrüche müssen abgeschottet werden, damit im Brandfall weder Feuer noch Rauch in andere Brandabschnitte übertragen wird. Zu diesem Zweck sind Vorrichtungen für Rohrabschottungen von nicht brennbaren und brennbaren Ver- und Entsorgungsleitungen bekannt. Beispielsweise sind Rohrmanschetten im Wanddurchbruchsbereich bekannt, die bei zumindest zwei Seiten des Durchbruchs gehaltert sind. Diese Rohrmanschetten sind im wesentlichen als zwei unterschiedliche Typen bekannt. Eine erste Ausführungsform der Rohrmanschette weist eine vorgespannte Feder auf, die mittels eines Schmelzlotes gesichert ist. Bei bestimmten Temperaturen, die nur bei Brandeinwirkung erreicht werden, verliert das Schmelzlot seine Festigkeit und die vorgespannte Feder zieht einen Metallkeil in das sich erweichende Kunststoffrohr und verschließt somit die Rohröffnung. Eine alternative Ausgestaltung sieht bei Rohrmanschetten vor, daß auf der Innenseite ein sich bei hoher Temperatur nach innen ausdehnendes feuerfestes Blähmaterial angeordnet ist. In beiden Fällen weisen die Rohrmanschetten ein außen liegendes Gehäuse aus Metall auf, dessen Wandstärke ausreichend groß bemessen ist, so daß ein Ausweichen der Rohrmanschetten radial nach außen nicht möglich ist. Innerhalb des Gehäuses sind femer schalldämmende Schichten vorgesehen, welche eine Übertragung von Körperschallwellen über die Rohrmanschette auf das Bauwerk verhindem sollen. Das feuerfeste Blähmaterial einerseits und das schalldämmende Material andererseits sind als separate Baugruppen, insbesondere ringförmig innerhalb des Gehäuses angeordnet und umgeben ihrerseits die Rohrleitung, die brennbar oder nicht brennbar ausgebildet sein kann. Der Fertigungsaufwand derartiger Rohrmanschetten ist im Hinblick auf den gegliederten Aufbau von Gehäusen, Blähmaterial, vorgespannten Federn, Stahlkeilen sowie schalldämmendem Material nicht unerheblich. Vor allen das aus Festigkeitsgründen aus Metall bestehende Gehäuse erfordert einen erheblichen Fertigungsaufwand und Materialeinsatz, wobei das hohe Gewicht derartiger Rohrmanschetten vor allem bei größeren Rohrdurchmessem hinsichtlich seiner Handhabung nachteilig ist. Femer stellt auch die Verankerung derartiger Rohrmanschetten im Wanddurchbruch ein Problem dar, da derartige Rohrmanschetten in der Regel mittels Dübeln gehalten werden müssen, wodurch das die Rohrmanschetten umgebende Material eine ausreichende Festigkeit aufweisen muß.

Es ist femer bekannt, Stahlhüllrohre für die Durchführung von Rohr- und /oder Leitungssträngen durch das Mauerwerk eines Gebäudes zu verwenden. Diese Stahlhüllrohre sind mit Mineralwolle verfüllt. Das hohe Gewicht eines derartigen Stahlhüllrohres erfordert aber erhöhte statische Anforderungen an den das Stahlhüllrohr umgebenden Bereich der Wandung. Um das Stahlhüllrohr zu montieren sind spezielle Aufhänger vor und hinter der Wand vorgesehen, um entsprechend hohe statische Lasten aufzunehmen.

Aus der WO 93/12 565 ist eine Vorrichtung zur abdichtenden Einfassung von Rohr- und/oder Leitungssträngen in einer Mauer- und/oder Decken- bzw. Bodenöffnung eines Gebäudes, bestehend aus einer Manschette und einem Schott. Das Schott besteht aus einem feuerresistenten Beton und ist daher zwar hitzebeständig aber nicht flexibel. Eventuell durch Brandeinwirkung auftretende Spannungen zwischen dem Schott und einer Wand können durch dieses Schott nicht ausgeglichen werden.

Die Manschette besteht aus einer äußeren Schicht und einer inneren Schicht. Die innere Schicht ist aus Mineralfasem ausgebildet, die nach Einführen eines Kabels abdichtend in dem verbleibenden Ringraum zwischen der äußeren Schicht und dem Kabel angeordnet wird. Die äußere Schicht besteht aus einem hitzebeständigen Material, dass sich bei Hitzeeinwirkung ausdehnt. Bei der hier vorgesehenen Manschette handelt es sich allerdings nicht um eine Rohrschale aus Mineralfasem, sondern um eine Kombination aus einer hitzebeständigen Element und einer Füllung aus Mineralfasem, bei der die nicht unerhebliche Gefahr besteht, dass bei der Verarbeitung unzulänglich gearbeitet wird, so dass die Manschette nicht hitzeresistent und rauchdicht ist.

Die DE 197 25 301 A1 beschreibt ein Brandschutzmaterial, insbesondere für Bauzwecke, mit einem flächigen Trägermaterial aus unbrennbaren, mineralischen Fasern und mit einer intumeszierenden Substanz, wobei das Trägermaterial mit der intumeszierenden Substanz zumindest beschichtet ist und das mit der intumeszierenden Substanz versehene Trägermaterial als flexibles, eine Netzstruktur aufweisendes vorgefertigtes Erzeugnis vorliegt.

Aus dieser Druckschrift sind verschiedene Anwendungen eines solchen Brandschutzmaterials im Bereich von Rohrdurchlässen für brennbare oder nicht brennbare Rohre bekannt, beispielsweise zur Bildung von abdichtenden Einfassungen von Rohr- und/oder Leitungssträngen in einer Mauer- und/oder Decken- bzw. Bodenöffnung eines Gebäudes, bestehend aus einer Manschette und einem Schott. Die Manschette besteht aus dem voranstehend beschriebenen Brandschutzmaterial. Als Schott ist ein Mörtelschott vorgesehen.

Ganz offensichtlich ist zu erkennen, dass die vorgesehene Manschette als wickelbares Material ausgebildet ist. Femer ist zu erkennen, dass das hier verwendete Material für die Manschette weder in Achsrichtung noch in Radialrichtung flexibel ausgebildet ist. Somit ist es bei dieser Manschette auch erforderlich, ein Mörtelschott zu verwenden, um zumindest über einen begrenzten Zeitraum der Hitzeeinwirkung ein ausreichend hitzeresistentes und rauchdichtes Schott zu erzielen.

Schließlich offenbart die DE 43 40 343 C1 eine Kabeldurchführung, die aus einem Rahmen, vorzugsweise aus Flacheisen und einem in den Rahmen eingesetzten Schott besteht. Das Schott ist gebildet aus einer Vielzahl von Modulen, die in einzelnen Ebenen des Rahmens angeordnet sind, wobei die Module Formelemente aus gepresster Steinwolle aufweisen können. Neben diesen Formelementen sind Füllstücke und/oder Spannkeile vorgesehen, mit denen der Bereich des Schotts geschlossen wird, der nicht für die Durchführung eines Kabels vorgesehen ist. Diese Kabeldurchführung ist hinsichtlich der Anforderungen an ein hitzeresistentes und rauchdichtes Schott nicht ausreichend.

Ausgehend von diesem Stand der Technik liegt der Erfindung die **Aufgabe** zugrunde, eine gattungsgemäße Vorrichtung zu schaffen, die zumindest die Feuerwiderstandsklasse F 90 erreicht und gleichzeitig konstruktiv einfach aufgebaut und somit kostengünstig herstell- sowie einbaubar ist.

Die **Lösung** dieser Aufgabenstellung sieht vor, daß die Rohrschale in Achsrichtung und in Radialrichtung für eine Anpassung der Rohrschale an das Schott und den Rohr- und/oder leitungsstrang in zumindest Feuer und Rauch resistenter Ausbildung flexibel ist und dass das Schott aus ein- oder zweilagigen, zumindest einseitig mit einem Dämmschichtbildner beschichteten Mineralwolleplatten besteht.

Eine erfindungsgemäß ausgebildete Vorrichtung sieht demzufolge vor, daß eine relativ leichte Rohrschale aus Mineralfasem den Rohr- bzw. Leitungsstrang umgibt und in einem Schott gehaltert ist, wobei die Rohrschale in Achs- und in Radialrichtung flexibel ist, so daß eine gute Anpassung der Rohrschale an das Schott und den Rohr- bzw. Leitungsstrang erfolgen kann, die letztendlich die notwendige Feuer- und Rauchresistenz ermöglicht. Das Schott besteht erfindungsgemäß aus ein- oder zweilagigen bzw. mehrlagigen Mineralwolleplatten, die zumindest einseitig mit einem Dämmschichtbildner beschichtet sind. Diese Mineralwolleplatten werden vorzugsweise mit anpassungsfähigem Brandschutzmaterial in die Mauer- und / oder Decken- bzw. Bodenöffnung des Gebäudes eingesetzt, so daß ein dichter Anschluß der Mineralwolleplatten an das Mauerwerk einerseits und an die Rohrschale andererseits vorgesehen ist.

Nach einer Weiterbildung der Erfindung ist vorgesehen, daß das Schott aus zumindest einseitig mit Brandschutzmörtel beplankten Mineralwolleplatten besteht.

Es hat sich als vorteilhaft erwiesen, die Rohrschale aus mit Kunstharz gebundener Mineralwolle, beispielsweise Steinwolle und / oder Glaswolle auszuführen, wobei die Mineralwolle einen Schmelzpunkt von mindestens 800° C, insbesondere 900° C und vorzugsweise >1000° C aufweist. Derartige Rohrschalen sind beispielsweise aus Steinwolle in einfacher und günstiger Weise als Massenprodukt herstellbar, wobei die mit Kunstharz gebundene Mineralwolle Formgebungseigenschaften aufweist, die das Herstellen von konturenscharfen Rohrschalen ermöglicht, die demzufolge die notwendige Abdichtungsfunktion hinsichtlich der ummantelten Rohr- und Leitungsstränge gewährleisten.

Um eine ausreichende Flexibilität verbunden mit entsprechender Stabilität der Rohrschalen zu erzielen, hat es sich als vorteilhaft erwiesen, die Rohrschalen mit einer Dichte zwischen 20 und 600 kg/m³, insbesondere zwischen 20 und 200 kg/m³ herzustellen. Hierbei ist zu beachten, daß mit zunehmender Dichte die Flexibilität der Rohrschalen verringert wird, so daß in Abhängigkeit des Anwendungsfalls, insbesondere in Abhängigkeit der Ausgestaltung des Schotts eine Dichte gewählt wird, die eine Kombination der beiderseitigen Anforderungen in vorteilhafter Weise bereitstellt.

Um die Montage der Rohrschale zu vereinfachen, ist vorgesehen, daß die Rohrschale eine achsparallel verlaufende Trennstelle aufweist. Vorzugsweise ist diese achsparallele Trennstelle verschließbar, insbesondere verklebbar, vemähbar oder dergleichen. Die Trennstelle in Verbindung mit der Flexibilität der Rohrschale ermöglicht ein Überstreifen der Rohrschale über den Rohr- und / oder Leitungsstrang direkt im Bereich des Mauerdurchbruchs. Es besteht aber auch die Möglichkeit, eine vollständig geschlossene Rohrschale vorzusehen, die dann in Achsrichtung über den Rohr- bzw. Leitungsstrang geschoben wird. Soweit die Rohrschale die achsparallel verlaufende Trennstelle aufweist, ist vorgesehen, daß nach der Montage der Rohrschale die Trennstelle verschlossen wird, um ein Durchschlagen von Flammen oder eine Diffusion von Rauch zu vermeiden. Hierzu können Verbindungsmittel wie Klebstoff, Draht, Klettverschluß, Klebebrand oder ähnliche weitere Verbindungsmittel vorgesehen sein.

Die Rohrschale besteht im wesentlichen aus Steinwollefasem oder aus einem vergleichbaren Material, insbesondere Glasfasern, Formglas, Vermiculite oder Kalziumsilikat, um den Anforderungen hinsichtlich Brandschutz, Schallschutz und Wärmedämmung mit geringstem Aufwand zu entsprechen. Derartige Rohrschalen erfordern bei entsprechender Dimensionierung kein stabiles Gehäuse, sondern können für den Feuchtigkeitsschutz lediglich in vorteilhafter Weise an der Außenfläche eine Kaschierung oder dünne Folie, insbesondere aus Aluminium oder Kunststoff aufweisen, deren Dicke vorzugsweise <1 mm, insbesondere <0,5 mm ist.

Die Rohrschale weist demgegenüber eine Wandstärke von zumindest 10 mm auf, um die entsprechenden Anforderungen des Wärmeschutzes zu erfüllen. Die Rohrschalen mit einer größeren Wandstärke werden dann zur Anwendung gelangen, wenn Rohrleitungen beispielsweise für erwärmtes Wasser entsprechend in Wanddurchbrüche zu integrieren sind.

Nach einem weiteren Merkmal der Erfindung ist vorgesehen, daß die Länge der Rohrschale zumindest der Wandstärke im Bereich der Mauer- und / oder Decken- bzw. Bodenöffnung entspricht. Es besteht aber auch die Möglichkeit, die Rohrschale länger auszubilden, so daß nach Einbau des Schotts die Rohrschale bündig im Bereich der Oberfläche des Schotts abgeschnitten werden kann. Hieraus resultieren auch Vorteile hinsichtlich der Lagerhaltung entsprechender Rohrschalen, die dann entsprechend dem Anwendungsfall gekürzt werden können.

Die Innenmantelfläche der Rohrschale liegt auf der Außenmantelfläche des ummantelten Rohr- und / oder Leitungsstrangs auf. Vorzugsweise ist der Innendurchmesser der Rohrschale geringfügig kleiner als der Außendurchmesser des ummantelten Rohr- und / oder Leitungsstrangs, so daß in jedem Fall eine dichte Anlage der Rohrschale am Rohr und / oder Leitungsstrang erzielt wird, die wiederum die Flammenbeständigkeit und Rauchdichtigkeit sicherstellt.

Nach einem weiteren Merkmal der Erfindung ist vorgesehen, daß mehrere Rohr- und / oder Leitungsstränge in einer Rohrschale angeordnet ist und daß die Rohrschalen stirnseitig mit einem anpassungsfähigen Brandschutzmaterial verschlossen sind. Bei dieser Ausführungsform werden mehrere Rohr- und oder Leitungsstränge zusammengefaßt und in einer entsprechend dimensionierten Rohrschale angeordnet. Hierbei ergibt sich aber in jedem Fall ein verbleibender Hohlraum in der Rohrschale, so daß bei dieser vorteilhaften Ausgestaltung der Erfindung die Rohrschale an beiden Stirnseiten zu verschließen ist. Für den Verschluß der Rohrschalen hat sich ein anpassungsfähiges Brandschutzmaterial als geeignet erwiesen, welches in die verbleibenden Hohlräume stimseitig in die Rohrschalen einspritzbar ist.

Die Rohr- und/oder Leitungsstränge liegen insbesondere auf vorzugsweise im Querschnitt U-förmig ausgebildeten Führungselementen, sogenannten Kabelpritschen auf, um in einem Wanddurchbruch eine im wesentlichen gleichmäßige Verteilung der Rohr- und / oder Leitungsstränge zu erzielen. Derartige Führungselemente können in mehreren Spalten nebeneinander bzw. in mehreren Reihen untereinander angeordnet sein.

Hierbei hat es sich als vorteilhaft erwiesen, die Führungselemente beidseitig mit Abstand zum Schott enden zu lassen, so daß das Schott im Brandfall nicht durch Spannungen aufgrund unterschiedlicher Wärmeausdehnungskoeffizienten der verwendeten Materialien belastet wird. Eine derartige Belastung führt in der Regel sehr schnell zu Undichtigkeiten im Bereich des Schotts, so daß die Brandresistenz nicht erfüllt wird.

Die Mineralwolleplatten des Schotts sind zumindest einseitig Aluminium kaschiert und mit einem anpassungsfähigen Brandschutzmaterial in die Mauer- und / oder Decken- bzw. Bodenöffnung eingesetzt. Ferner weist die Rohrschale auf ihrer Innenmantelfläche eine Beschichtung mit einem Dämmstoffbildner auf, so daß insgesamt ein dichtender Abschluß zwischen den Konstruktionselementen besteht.

Weitere Merkmale und Vorteile der Erfindung ergeben sich aus der nachfolgenden Beschreibung der zugehörigen Zeichnung, in der bevorzugte Ausführungsformen der Erfindung dargestellt sind. In der Zeichnung zeigen:
- Figur 1: eine erste Ausführungsform einer Vorrichtung zur abdichtenden Einfassung von Rohr- und / oder Leitungssträngen in einer Ansicht;
- Figur 2: die Vorrichtung gemäß Figur 1 in einer geschnitten dargestellten Seitenansicht;
- Figur 3: eine zweite Ausführungsform einer Vorrichtung zur abdichtenden Einfassung von Rohr- und / oder Leitungssträngen in einer Ansicht und
- Figur 4: die Vorrichtung gemäß Figur 3 in einer geschnitten dargestellten Seitenansicht.

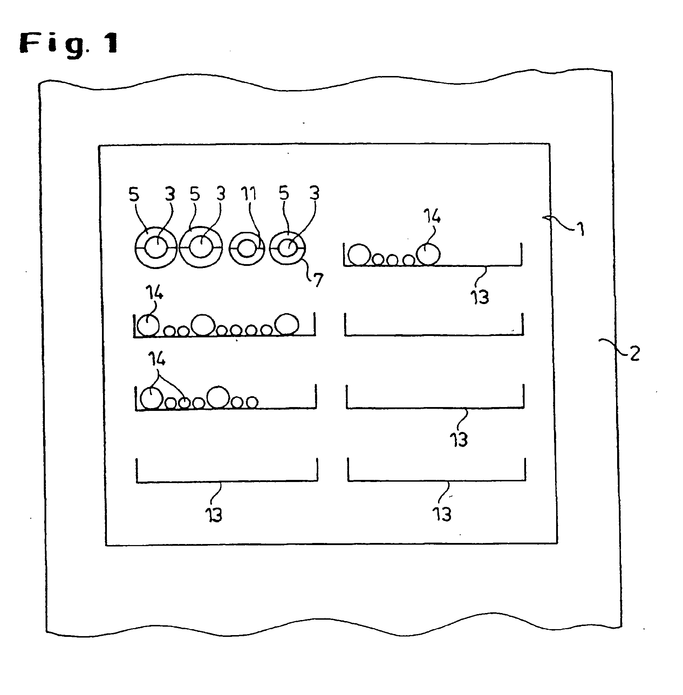

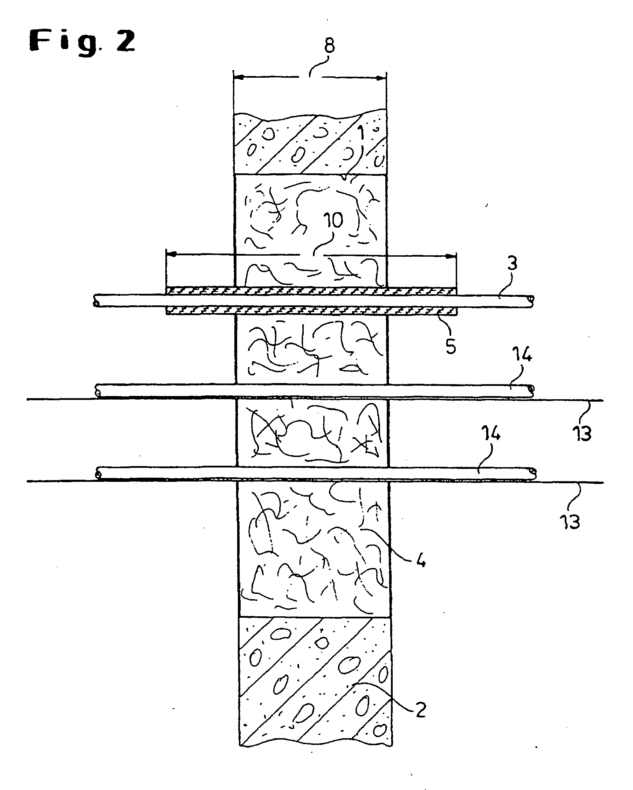

In den Figuren 1 und 2 ist eine erste Ausführungsform einer Vorrichtung zur abdichtenden Einfassung von Rohr- und / oder Leitungssträngen 3 in einer Maueröffnung 1 in der Wand 2 eines Gebäudes dargestellt. Die Vorrichtung besteht aus mehreren Rohr- und Leitungssträngen 3 sowie Elektroleitungen 14, wobei die Rohr- und Leitungsstränge 3 jeweils mit einer Manschette 5 ummantelt sind, die als Rohrschale aus Mineralfasern ausgebildet ist. Die Rohr- und Leitungsstränge 3 und die Elektroleitungen 14 sind durch die Maueröffnung 1 geführt und durchgreifen ein Schott 4 aus einer Mineralwolleplatte, die mit einem Dämmschichtbildner beschichtet ist.

Die Elektroleitungen 14 sind in Tragerinnen 13 nebeneinander angeordnet, wobei die Tragerinnen 13 das Schott 4 durchgreifen und im Querschnitt U-förmig ausgebildet sind.

Jede als Rohrschale ausgebildete Manschette 5 ist in Achsrichtung und in Radialrichtung flexibel, so daß eine große Anpassungsfähigkeit der Manschetten 5 an die Durchtrittsstellen im Schott 4 besteht. Die Flexibilität der aus Mineralfasern bestehenden Manschetten 5 kann beispielsweise durch Walken der Rohrschale bereits bei ihrer Produktion erzielt werden. Darüber hinaus besteht auch die Möglichkeit, die Flexibilität durch eine bestimmte Einstellung der Ausgangskomponenten zueinander, insbesondere des Bindemittels und der Mineralfasern zu erzielen, wobei zu berücksichtigen ist, daß die Flexibilität ausreichend groß sein muß, gleichzeitig aber auch eine ausreichende Stabilität der Manschette 5 gegeben sein muß, so daß die notwendigen Voraussetzungen für eine Brandabschottung bei gleichzeitiger Wärmedämmung erzielt werden.

Die Manschette 5 besteht aus Steinwolle mit einem Schmelzpunkt >1000° C und einer Dichte von 100 kg/cm³ . Die Manschette 5 weist eine Materialstärke 9 von mehr als 10 mm auf. Ein durch die Manschette 5 bereitgestellter Innendurchmesser 16 ist geringfügig geringer ausgebildet, als der Außendurchmesser des zu ummantelnden Rohr- und Leitungsstranges 3.

Auf der Außenmantelfläche der Manschette 5 ist eine flexible Kaschierung 7 angeordnet. Die Kaschierung 7 ist als Feuchtigkeitssperre vorgesehen, um nach der Montage beim Verfüllen der Maueröffnung 1 mit einem geeigneten Brandschutzkitt 6 versehen zu werden, ohne daß die dem Brandschutzkitt 6 oder auch einem Mörtel innewohnende Feuchtigkeit in die Manschette 5 eindringen kann. Bei der Verwendung der Manschetten 5 an Frischwasserleitungen mit Mediumstemperaturen unterhalb der Umgebungstemperatur ist die Kaschierung 7 als Aluminiumfolie ausgebildet. In anderen Fällen ist lediglich ein feuchtigkeitsabweisendes Material, beispielsweise eine Kunststoffolie erforderlich. Die Kaschierung 7 weist eine Materialstärke von 0,3 mm auf.

Jede Manschette 5 hat eine achsparallel verlaufende Trennstelle 11, so daß jede Manschette 5 aufklappbar und über den bereits durch die Maueröffnung 1 geführten und montierten Rohr- bzw. Leitungsstrang 3 gestülpt werden kann. Nachfolgend wird die Trennstelle 11 in geeigneter Weise mit Klebemitteln, Klebeband, Wickeldraht oder dergleichen verschlossen.

Figur 2 zeigt die Vorrichtung gemäß Figur 1 in einer geschnitten dargestellten Seitenansicht. Es ist zu erkennen, daß jede Manschette 5 eine Länge 10 aufweist, die größer ist als die Materialstärke 8 der Wand. Ferner ist zu erkennen, daß das Schott 4 die Maueröffnung 1 vollständig mit Ausnahme der durchgeführten Rohr- bzw. Leitungsstränge 3 und Elektroleitungen 14 ausfüllt.

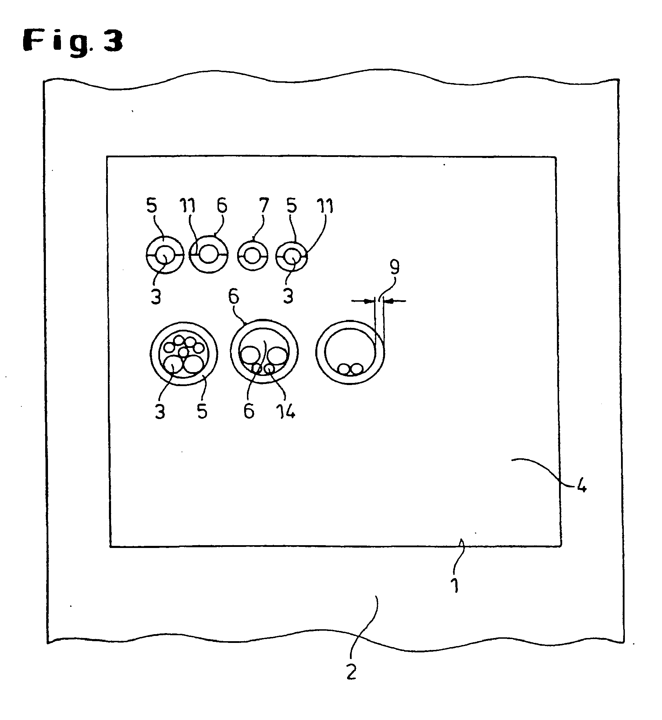

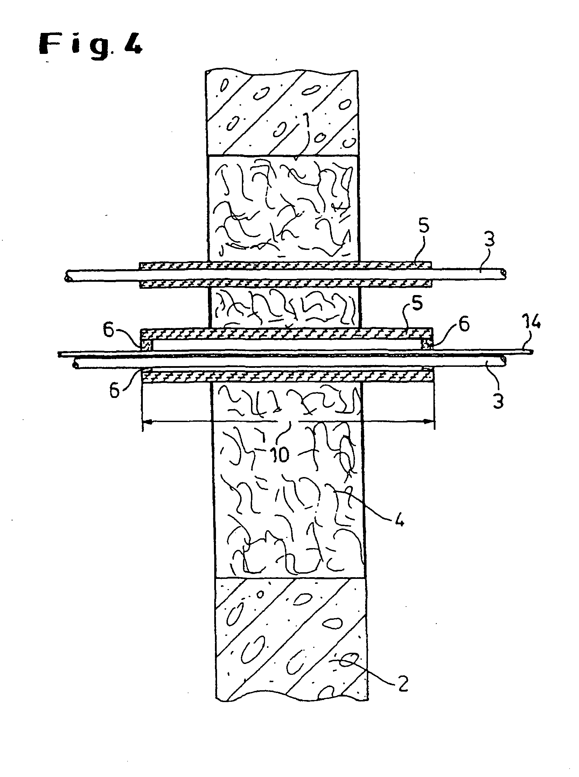

Eine zweite Ausführungsform der Erfindung ist in den Figuren 3 und 4 dargestellt. Diese Ausführungsform unterscheidet sich von der voranstehend dargestellten Ausführungsform gemäß den Figuren 1 und 2 dadurch, daß in einem Teil der Manschetten 5 mehrere Rohr- bzw. Leitungsstränge 3 und /oder Elektroleitungen 14 angeordnet sind. Hierbei ergibt sich zwangsläufig ein innerhalb der Manschetten 5 verbleibender Hohlraum, der mit Brandschutzkitt 6 im Bereich der stimseitigen Enden der Manschette 5 ausgefüllt ist. Es besteht selbstverständlich auch die Möglichkeit, den gesamten verbleibenden Hohlraum in jeder Manschette 5 mit Brandschutzkitt 6 auszufüllen, was jedoch zu einem Mehrverbrauch eines derartigen Brandschutzkittes 6 führt.

Bei dieser Ausführungsform ist vorteilhaft, daß die Elektroleitungen 14 bzw. Rohr- und / oder Leitungsstränge 3 nicht auf Tragerinnen angeordnet sind, die die Maueröffnung 1 durchgreifen. Es ist vorgesehen, daß derartige Tragerinnen 13 bis kurz vor die Wand 2 geführt sind, so daß bei auftretender Brandgefahr die unterschiedlichen Wärmeausdehnungskoeffizienten der insbesondere aus Metallblech hergestellten Tragerinnen 13 und des Schotts 4 nicht zu Spannungen innerhalb des Schotts 4 führen können, die in der Regel zu Undichtigkeiten führen.

## Patentansprüche

1. Vorrichtung zur abdichtenden Einfassung von Rohr- und / oder Leitungssträngen in einer Mauer- und / oder Decken- bzw. Bodenöffnung eines Gebäudes, bestehend aus einer den Rohr- und / oder Leitungsstrang ummantelnden, als Rohrschale aus Mineralfasern ausgebildeten Manschette, die bei Brandeinwirkung hitzeresistent und rauchdicht ist und einem an der Mantelfläche der Manschette anschließenden, die Mauer- und /oder Decken- bzw. Bodenöffnung ausfüllenden Schott aus ein- oder zweilagigen bzw. mehrlagigen, zumindest einseitig mit einem Dämmschichtbildner beschichteten Mineralwolleplatten,
**dadurch gekennzeichnet,**
**dass** die Rohrschale in Achsrichtung und in Radialrichtung für eine Anpassung der Rohrschale an das Schott (4) und den Rohr- und/oder Leitungsstrang (3) in zumindest Feuer und Rauch resistenter Ausbildung flexibel ist.

2. Vorrichtung nach Anspruch 1,
**dadurch gekennzeichnet,**
**dass** das Schott (4) aus zumindest einseitig mit Brandschutzmörtel beplankten Mineralwolleplatten besteht.

3. Vorrichtung nach Anspruch 1,
**dadurch gekennzeichnet,**
**dass** die Rohrschale aus Kunstharz gebundener Mineralwolle, beispielsweise Steinwolle und / oder Glaswolle, mit einem Schmelzpunkt von zumindest 800° C, insbesondere 900° C und vorzugsweise >1000° C besteht.

4. Vorrichtung nach Anspruch 1,
**dadurch gekennzeichnet,**
**dass** die Rohrschale eine Dichte zwischen 20 und 600 kg/m³, insbesondere zwischen 20 und 200 kg/m³ aufweist.

5. Vorrichtung nach Anspruch 1,
**dadurch gekennzeichnet,**
**dass** die Rohrschale eine achsparallel verlaufende Trennstelle (11) aufweist.

6. Vorrichtung nach Anspruch 5,
**dadurch gekennzeichnet,**
**dass** die Trennstelle (11) verschließbar, insbesondere verklebbar, vemähbar oder dergleichen ist.

7. Vorrichtung nach Anspruch 1,
**dadurch gekennzeichnet,**
**dass** die Rohrschale eine Kaschierung (7) und / oder dünne Folie auf ihrer Außenmantelfläche aufweist.

8. Vorrichtung nach Anspruch 7,
**dadurch gekennzeichnet,**
**dass** die Kaschierung (7) aus Aluminium und die Folie aus Kunststoff ausgebildet ist.

9. Vorrichtung nach Anspruch 7,
**dadurch gekennzeichnet,**
**dass** die Kaschierung (7) und / oder Folie eine Materialstärke <1 mm, insbesondere <0,5 mm hat.

10. Vorrichtung nach Anspruch 1,
**dadurch gekennzeichnet,**
**dass** die Rohrschale eine Wandstärke von zumindest 10 mm aufweist.

11. Vorrichtung nach Anspruch 1,
**dadurch gekennzeichnet,**
**dass** die Länge der Rohrschale zumindest der Wandstärke (8) im Bereich der Mauer- und / oder Decken- bzw. Bodenöffnung (1) entspricht.

12. Vorrichtung nach Anspruch 1,
**dadurch gekennzeichnet,**
**dass** die Innenmantelfläche der Rohrschale auf der Außenmantelfläche des ummantelten Rohr- und / oder Leitungsstrangs (3) aufliegt.

13. Vorrichtung nach Anspruch 1,
**dadurch gekennzeichnet,**
**dass** der Innendurchmesser (16) der Rohrschale geringfügig kleiner als der Außendurchmesser des ummantelten Rohr- und / oder Leitungsstrangs (3) ist.

14. Vorrichtung nach Anspruch 1,
**dadurch gekennzeichnet,**
**dass** mehrere Rohr- und / oder Leitungsstränge (3) in einer Rohrschale angeordnet sind und dass die Rohrschalen stirnseitig mit einem anpassungsfähigen Brandschutzmaterial (6) verschlossen sind.

15. Vorrichtung nach Anspruch 1,
**dadurch gekennzeichnet,**
**dass** die Rohr- und / oder Leitungsstränge (3) auf vorzugsweise im Querschnitt U-förmig ausgebildeten Führungselementen (13) aufliegen.

16. Vorrichtung nach Anspruch 15,
**dadurch gekennzeichnet,**
**dass** die Führungselemente (13) beidseitig mit Abstand zum Schott (4) enden.

17. Vorrichtung nach Anspruch 1,
**dadurch gekennzeichnet,**
**dass** die Mineralwolleplatten des Schotts (4) zumindest einseitig Aluminium kaschiert sind.

18. Vorrichtung nach Anspruch 1,
**dadurch gekennzeichnet,**
**dass** die Mineralwolleplatten mit einem anpassungsfähigen Brandschutzmaterial in die Mauer- und / oder Decken- bzw. Bodenöffnung (1) eingesetzt sind.

19. Vorrichtung nach Anspruch 1,
**dadurch gekennzeichnet,**
**dass** die Rohrschale auf ihrer Innenmantelfläche streifenförmig oder vollflächig mit einem Dämmstoffbildner beschichtet ist.

## Claims

1. Device for providing a sealing covering for a train of pipes and/or ducts within a wall and/or ceiling or bottom opening of a building, which device consists of a sleeve designed as a pipe shell made of mineral fibers surrounding said train of pipes and/or ducts and being heat-resistant and smoke-tight in the case of fire, and of a bulkhead composed of single or double or multilayered mineral wool panels coated at least on one side with an insulating layer creator, the bulkhead adjoining the surface area of said sleeve and filling up said wall and/or ceiling or bottom opening,
**characterized in**
**that** the pipe shell is flexible in the axial and radial directions, at least in a fire and smoke-resistant design, for adaption of the pipe shell to the bulkhead (4) and the train of pipes and/or ducts (3).

2. Device according to claim 1,
**characterized in**
**that** said bulkhead (4) is comprised of mineral wool panels which are planked on at least one side thereof with fire-protective mortar.

3. Device according to claim 1,
**characterized in**
**that** said pipe shell is comprised of artificial resin-bound mineral wool, for example rock wool and/or glass wool, having a melting point of at least 800°C and particularly 900°C and preferably > 1000°C.

4. Device according to claim 1,
**characterized in**
**that** said pipe shell has a density of between 20 and 600 kg/m³ and particularly of between 20 and 200 kg/m³.

5. Device according to claim 1,
**characterized in**
**that** said pipe shell includes a separation location (11) extending parallel to the axis.

6. Device according to claim 5,
**characterized in**
**that** the separation location (11) can be closed and particularly luted, sewn up or the like.

7. Device according to claim 1,
**characterized in**
**that** said pipe shell includes a lamination (7) and/or thin film on the outer surface area thereof.

8. Device according to claim 1,
**characterized in**
**that** said lamination (7) is formed of aluminum and said film is formed of synthetic material.

9. Device according to claim 7,
**characterized in**
**that** said lamination (7) and/or film has material thickness of < 1 mm and particularly of < 0.5 mm.

10. Device according to claim 1,
**characterized in**
**that** said pipe shell has wall thickness of at least 10 mm.

11. Device according to claim 1,
**characterized in**
**that** the length of said pipe shell at least corresponds to the wall thickness (8) within the region of said wall and/or ceiling or bottom opening (1).

12. Device according to claim 1,
**characterized in**
**that** the inner surface area of said pipe shell rests on the outer surfaces area of the covered train of pipes and/or ducts (3).

13. Device according to claim 1,
**characterized in**
**that** the inner diameter (16) of the said pipe shell is slightly smaller than the outer diameter of said covered train of pipes and/or ducts (3).

14. Device according to claim 1,
**characterized in**
**that** plural trains of pipes and/or ducts (3) are arranged within a pipe shell, and that the pipe shells are closed on the face thereof by means of an adaptive fire protection material (6).

15. Device according to claim 1,
**characterized in**
**that** the trains of pipes and/or ducts (3) rest on guide elements (13) which are preferably configured with a U-shaped cross section.

16. Device according to claim 1,
**characterized in**
**that** the guide elements (13) terminate on both ends thereof with distance to said bulkhead.

17. Device according to claim 1,
**characterized in**
**that** the mineral wool panels of said bulkhead (4) are aluminum-laminated at least on one side thereof.

18. Device according to claim 1,
**characterized in**
**that** said mineral wool panels are inserted in said wall and/or ceiling or bottom opening (1) with an adaptive fire protection material.

19. Device according to claim 1,
**characterized in**
**that** said pipe shell is coated on the inner surface area thereof with an insulating material creator, in the form of strips or all-over.

## Revendications

1. Dispositif pour entourer de manière étanche des lignes de tubes et/ou de conduites dans une ouverture de mur et/ou de plafond ou de sol d'un bâtiment, constitué par une manchette qui enveloppe la ligne de tubes et/ou de conduites, configurée comme une enveloppe de tube en fibres minérales, qui est résistante à la chaleur et étanche à la fumée lors de l'action d'un incendie et par une cloison étanche constituée par des plaques de laine minérale en une ou deux ou plusieurs couches, enduites tout au moins d'un côté avec un formateur de couche isolante, cloison étanche qui se rattache à la surface latérale de la manchette et qui remplit l'ouverture de mur et/ou de plafond ou de sol,
**caractérisé en ce**
**que** l'enveloppe de tube est flexible dans le sens axial et dans le sens radial pour une adaptation de l'enveloppe de tube à la cloison étanche (4) et à la ligne de tubes et/ou de conduites (3) en une configuration résistante au moins au feu et à la fumée.

2. Dispositif selon la revendication 1,
**caractérisé en ce**
**que** la cloison étanche (4) est constituée par des plaques de laine minérale revêtues tout au moins d'un côté avec du mortier ignifuge.

3. Dispositif selon la revendication 1,
**caractérisé en ce**
**que** l'enveloppe de tube est constituée par de la laine minérale liée à de la résine synthétique, par exemple à de la laine minérale et/ou de la laine de verre, avec un point de fusion d'au moins 800° C, en particulier de 900 °C et de préférence > 1000° C.

4. Dispositif selon la revendication 1,
**caractérisé en ce**
**que** l'enveloppe de tube a une densité entre 20 et 600 kg/m³, en particulier entre 20 et 200 kg/m³.

5. Dispositif selon la revendication 1,
**caractérisé en ce**
**que** l'enveloppe de tube a un endroit de séparation (11) qui est parallèle à l'axe (11).

6. Dispositif selon la revendication 5,
**caractérisé en ce**
**que** l'endroit de séparation (11) peut être fermé, en particulier peut être collé, cousu ou équivalent.

7. Dispositif selon la revendication 1,
**caractérisé en ce**
**que** l'enveloppe de tube présente un contrecollage (7) et/ou une feuille mince sur sa surface latérale extérieure.

8. Dispositif selon la revendication 7,
**caractérisé en ce**
**que** le contrecollage (7) est configuré en aluminium et la feuille en matière plastique.

9. Dispositif selon la revendication 7,
**caractérisé en ce**
**que** le contrecollage (7) et/ou la feuille a une épaisseur de matériau < 1 mm, en particulier < 0,5 mm.

10. Dispositif selon la revendication 1,
**caractérisé en ce**
**que** l'enveloppe de tube a une épaisseur de paroi d'au moins 10 mm.

11. Dispositif selon la revendication 1,
**caractérisé en ce que** la longueur de l'enveloppe de tube correspond au moins à l'épaisseur de paroi (8) dans la zone de l'ouverture du mur et/ou du plafond et/ou du sol (1).

12. Dispositif selon la revendication 1, **caractérisé en ce que** la surface latérale intérieure de l'enveloppe du tube repose sur la surface latérale extérieure de la ligne de tubes et/ou de conduites gainée (3).

13. Dispositif selon la revendication 1,
**caractérisé en ce**
**que** le diamètre intérieur (16) de l'enveloppe de tube est légèrement inférieur au diamètre extérieur de la ligne de tubes et/ou de conduites gainée (3).

14. Dispositif selon la revendication 1,
**caractérisé en ce**
**que** plusieurs lignes de tubes et/ou de conduites (3) sont placées dans une enveloppe de tube et que les enveloppes de tube sont fermées sur le côté de face avec un matériau ignifuge adaptable (6).

15. Dispositif selon la revendication 1,
**caractérisé en ce**
**que** les lignes de tubes et/ou de conduites (3) reposent sur des éléments de guidage (13) de préférence configurés de section en forme d'U.

16. Dispositif selon la revendication 15,
**caractérisé en ce**
**que** les éléments de guidage (13) se terminent des deux côtés avec un écartement par rapport à la cloison étanche (4).

17. Dispositif selon la revendication 1,
**caractérisé en ce**
**que** les plaques de laine minérale de la cloison étanche (4) sont contrecollées au moins d'un côté avec de l'aluminium.

18. Dispositif selon la revendication 1,
**caractérisé en ce**
**que** les plaques de laine minérale sont mises en place avec un matériau ignifuge adaptable dans l'ouverture du mur et/ou du plafond ou du sol (1).

19. Dispositif selon la revendication 1,
**caractérisé en ce**
**que** l'enveloppe de tube est enduite sur sa surface latérale intérieure avec un formateur de matériau isolant en forme de bande ou sur toute la surface.
